Europäisches Patentamt

European Patent Office

Office européen des brevets

(11) Veröffentlichungsnummer: **0 388 731**
**A2**

## (12) EUROPÄISCHE PATENTANMELDUNG

(21) Anmeldenummer: 90104508.8

(51) Int. Cl.⁵: **G11B 5/702**

(22) Anmeldetag: 09.03.90

(30) Priorität: 22.03.89 DE 3909383

(43) Veröffentlichungstag der Anmeldung:
26.09.90 Patentblatt 90/39

(84) Benannte Vertragsstaaten:
**DE FR GB**

(71) Anmelder: **Agfa-Gevaert AG**

**D-5090 Leverkusen 1(DE)**

(72) Erfinder: **Gerum, Johannes, Dr.**
**Blumenstrasse 51**
**D-8034 Unterpfaffenhofen(DE)**
Erfinder: **Credner, Hans-Heinrich, Dr.**
**Steinberg 7**
**D-8021 Hohenschäftlarn(DE)**
Erfinder: **Baarfüsser, Johann, D.I.**
**Julius Härtling Strasse 2**
**D-8035 Gauting(DE)**

(54) **Magnetischer Aufzeichnungsträger.**

(57) Ein magnetischer Aufzeichnungsträger, bestehend aus einem Schichtträger, einer bindemittel- und rußhaltigen Haftschicht und einer darüber liegenden Magnetschicht mit verbesserter Haftfestigkeit, Oberflächenleitfähigkeit und Laufeigenschaften wird dadurch erhalten, daß die Haftschicht einen leitfähigen Ruß mit einer BET-Oberläche von 200 - 700 m²/g bei einer DBP-Zahl von nicht über 300 ml/100 g sowie ein oder mehrere Bindemittel enthält, die auch in der Magnetschicht eingesetzt werden. Vorteilhafterweise ist der Ruß mit einem Dispergator oder mit Fettsäure belegt, als besonders günstige Bindemittel werden Polyurethan, Polyester und Polyvinylidenchlorid gefunden.

EP 0 388 731 A2

## Magnetischer Aufzeichnungsträger

Die vorliegende Erfindung betrifft einen magnetischen Aufzeichnungsträger, bestehend aus einem unmagnetischen Schichtträger und einer Magnetschicht, wobei sich zwischen dem Schichtträger und der Magnetschicht eine bindemittel-und rußhaltige Haftschicht befindet.

Es ist bereits bekannt, daß bei magnetischen Aufzeichnungsträgern Zwischenschichten zwischen dem nichtmagnetischen Substrat und der magnetischen Schicht zum Einsatz kommen, wodurch eine Reihe von Eigenschaften vorteilhaft beeinflußt werden können.

Zur Absenkung der Lichtdurchlässigkeit werden rußhaltige Zwischenschichten beschrieben, um den auf Transparenzänderung des magnetischen Aufzeichnungsmedium bestehenden Abschaltmechanismus bestimmter Aufzeichnungssysteme gewährleisten zu können.

Spezielle leitfähige Ruße für Zwischenschichten werden ausgewählt, wenn besondere Anforderungen an die Vermeidung elektrostatischer Aufladbarkeit gestellt werden. Dies kann erforderlich werden bei schnell laufenden oder schnell umspulenden Systemen, um eine Beschädigung der Aufzeichnung durch elektrostatische Entladungen zu vermeiden. Weiter müssen insbesondere die Aufzeichnungsträger von Videosystemen möglichst staubfrei bleiben, was ebenfalls einen leitfähigen Schichtaufbau erforderlich macht.

Werden besondere Anforderungen an die Schichthaftung zwischen Magnetschicht und Schichtträger gestellt, läßt sich bekanntermaßen durch Einbau einer Zwischenschicht, bestehend aus einem oder mehreren haftvermittelnden Bindemitteln, der Schichtzusammenhalt verbessern.

Insbesondere für hochdichte Aufzeichnungen ist eine extrem glatte Oberfäche der magnetischen Schicht erforderlich, um eine Pegelreduzierung durch Abstandsdämpfung zu vermeiden. Um dieses Ziel zu erreichen werden, üblicherweise feinteilige rußhaltige Zwischenschichten eingesetzt, um die Rauhigkeit der Schichtträgeroberfläche abzudecken.

Senkung der Schichttransparenz, Erhöhung der Schichtleitfähigkeit, Verbesserung der Schichthaftung und Erzielung einer glatteren Schichtoberfläche werden bekanntermaßen durch Auftrag einer entsprechenden Schicht zwischen Schichtträger und der magnetischen Schicht zu erreichen versucht.

Obwohl dazu bereits eine Vielzahl von Veröffentlichungen bekannt ist, sind die damit verbundenen Nachteile noch nicht beseitigt, zumal da die Anforderungen an heutige magnetische Aufzeichnungsträger im Hinblick auf die Speicherdichte und die Zuverlässigkeit im Laufverhalten drastisch angestiegen sind.

So wird in GB 1 146 811 eine rußhaltige Zwischenschicht beschrieben, wobei als Rußkomponente ein Acetogenruß genannt wird. Bekanntlich werden nach dem Acetogenverfahren nur Ruße erzielt, die eine spezifische Oberfläche von nicht wesentlich über ca. 150 $m^2/g$ aufweisen. Es zeigt sich jedoch, daß Ruße mit einer BET-Oberfläche kleiner 150 $m^2/g$ insbesondere für Videoanwendung nicht fein genug dispergierbar sind, so daß die auf die Zwischenschicht gegossene magnetische Oberschicht eine unbefriedigende Oberflächenglätte und damit zu geringe Signalpegel aufweist.

Im Gegensatz dazu werden in JP-N 55 055 432 rußhaltige Zwischenschichten mit einer spezifischen BET-Oberfläche von 700 $m^2/g$ und einer DBP-Adsorbtion von größer 300 ml/100 g genannt.

Ruße mit sehr hoher BET-Oberfläche wiederum lassen sich zwar fein dispergieren, eine ausreichende Stabilisierung der durch die Dispergierung erhaltenen vereinzelten Rußpartikel ist jedoch nur schwer möglich. Die dabei entstehenden sekundären Rußagglomerate beeinflussen zwar die gewünschte Oberflächenleitfähigkeit nicht, prägen sich jedoch ebenfalls durch die magnetische Schicht durch, was zu unbefriedigender Oberflächenglätte und zu einer Absenkung der Signalpegel führt.

DE-OS 34 28 943 und JP Appl. N 60-14 14 97 beschreiben eine rußhaltige Zwischenschicht mit einem strahlenhärtbaren Bindemittel, in der Absicht eine hochvernetzte Zwischenschicht und eine möglichst glatte Schichtoberfläche zu erhalten. Eine hohe Schichthaftung läßt sich jedoch nur erreichen, wenn das für die Zwischenschichten eingesetzte Bindemittel mindestens einer Bindemittelkomponente der Magnetschicht entspricht.

In JP Appl. NO 59-49 518 wurde gefunden, daß der für die Zwischenschicht ausgewählte Ruß in Gegenwart eines Phospholipids dispergiert werden muß, um die angestrebte Oberflächenglätte zu erzielen. Es besteht jedoch die Befürchtung, daß der niedermolekulare Dispergator durch die Magnet schicht diffundiert und die Laufeigenschaften nachteilig beeinflußt.

In JP-N 55 084 040 wird versucht, sowohl die Schichthaftung als auch die Oberflächenleitfähigkeit zu verbessern. Beispielhaft wird dies jedoch nur durch Auftrag von zwei getrennten Zwischenschichten erreicht.

Der Erfindung liegt daher die Aufgabe zugrunde, einen magnetischen Aufzeichnungsträger mit verbesserter Haftfestigkeit und Oberflächenleitfähigkeit sowie der Laufeigenschaften dadurch zu erzielen, daß zwischen den Schichtträger und die Magnetschicht eine rußhaltige Haftschicht eingefügt wird, ohne eine Verschlechterung anderer Eigenschaften in Kauf nehmen zu müssen.

Überraschenderweise wurde gefunden, daß die Aufgabe dadurch gelöst wird, daß zwischen dem Schichtträger und der Magnetschicht eine Zwischenschicht aufgetragen wird, bestehend aus einem leitfähigen Ruß mit einer BET-Oberfläche zwischen 200 und 700 $m^2/g$ bei einer DBP-Zahl von nicht über 300 ml/100g und einem rezeptureigenen Bindemittel.

Die DBP-Zahl ist ein übliches Maß für die Ölabsorption und gibt an, wieviel Dibutylphthalat dem Ruß zugegeben werden muß, um eine eben fließbare Rußpaste zu erhalten. Unter rezeptureigenem Bindemittel der Zwischenschicht werden Bindemittelkomponenten verstanden, die auch in der darüberliegenden magnetischen Schicht ganz oder teilweise enthalten sind.

Aus der Vielzahl der bekannten rezeptureigenen Bindemittel als haftverbessernde Komponenten in Gegenwart des erfindungsgemäßen Rußes wurden Polyurethane, Polyester und Polyvinylidenchlorid-Copolymerisate gefunden, wobei überraschenderweise der Schichtzusammenhalt und die Ober flächenleitfähigkeit verbessert werden konnten, ohne sonstige Nachteile etwa im Laufverhalten oder der Signalempfindlichkeit des magnetischen Aufzeichnungsträgers in Kauf nehmen zu müssen.

Darüberhinaus wurde gefunden, daß der Einsatz einer Bindemittelmischung aus Polyurethan und Polyester, aus Polyurethan und Polyvinylidenchlorid-Copolymerisat oder Polyester und Polyvinylidenchlorid-Copolymerisat in Gegenwart des erfindungsgemäßen Rußes den Schichtzusammenhalt weiterverbessert, wobei das Mischungsverhältnis zwischen den Bindemittelmischungen von 2 : 8 und 8 : 2 variiert werden kann, ohne die haftverbessernde Wirkung der Zwischenschicht merklich zu beeinträchtigen.

Als geeignete Menge des rezeptureigenen Bindemittels wurden 50 - 250 Gewichtsteile auf 100 Gewichtsteile des erfindungsgemäßen Rußes bezogen gefunden. Senkt man die Menge des rezeptureigenen Bindemittels unter 50 Gewichtsteile auf 100 Gewichtsteile des erfindungsgemäßen Rußes bezogen ab, so sinkt die haftverbessernde Wirkung der Zwischenschicht deutlich. Erhöht man die Menge des rezeptureigenen Bindemittels auf über 250 Gewichtsteile auf 100 Gewichtsteile des erfindungsgemäßen Rußes bezogen, so läßt sich die erforderliche Oberflächenleitfähigkeit nicht mehr erreichen.

Darüberhinaus wurde gefunden, daß sich die Oberflächenrauhigkeit der Magnetschicht weiter absenken läßt, wenn der erfindungsgemäße Ruß der Zwischenschicht mit einem Dispergiermittel vorbehandelt wird.

Der ursprünglich als grobe Agglomeratkörnchen vorliegende Ruß wird durch mechanische Zerkleinerung möglichst bis zum Primärteilchen aufgeteilt. Dabei konnte die Rußdispersion durch Zusatz von Imidazolinderivaten oder Fettsäuren in einer Menge von 1 bis 5 Gewichtsteilen auf 100 Gewichtsteile des erfindungsgemäßen Rußes bezogen ausreichend stabilisiert werden, wodurch sich eine deutliche Verbesserung der Oberflächenglätte und damit des Signalrauschabstandes ergab.

Insbesondere für leitfähige Ruße einer BET-Oberfläche größer 400 $m^2/g$ konnte eine verbesserte Dispersionsstabilität verbunden mit erhöhter Oberflächenglätte und verbessertem Signalrauschabstand bei Einsatz eines Polyetheracrylates von 10 - 100 Gewichtsteilen auf 100 Gewichtsteile des erfindungsgemäßen Rußes bezogen gefunden werden.

Schwerpunktmäßig wurde die Untersuchung zur Verbesserung der Schichthaftung und Oberflächenleitfähigkeit durch Einsatz einer haftungsverbessernden und rußhaltigen Zwischenschicht an hochkoerzitiven magnetischen Medien durchgeführt, da die extremen Anforderungen der hochdichten analogen oder digitalen Aufzeichnung nur mit Metallpigmenten erzielbar sind.

Dennoch lassen sich haftverbessernde, rußhaltige Zwischenschichten auch bei Magnetschichten mit niederkoerzitiven magnetischen Pigmenten vorteilhaft einsetzen, wie z. B. $CrO_2, \gamma\text{-}Fe_2O_3$, $Fe_3O_4$ oder Co-dotiertem $Fe_3O_4$.

Die magnetischen und rußhaltigen Dispersionen werden in an sich bekannter Weise hergestellt.

Als Lösemittel für die Erstellung der Dispersion des magnetischen Pigmentes wie der Dispersion für die haftverbssernde rußhaltige Zwischenschicht können alle zur Lösung der ausgewählten Bindemittel tauglichen Flüssigkeiten verwendet werden. Beispiele sind Tetrahydrofuran, Dioxan, Dimethylformamid, Cyclohexanon, Methyl-Ethyl-Keton, Toluol, Methyl-Isobutylketon und andere, gegebenenfalls auch in Kombination miteinander.

Die Auswahl der eingesetzten niedermolekularen Dispergierhilfsmittel erfolgt aus der Vielzahl bekannter oberflächenaktiver Verbindungen, wie z. B. Fettsäureamine oder -diamine, Fettsäureamide oder -diamide, Fettsäuren beziehungsweise deren Ammoniumsalze, ethoxylierte Fettsäurederivate, aliphatische oder aromatische gegebenenfalls ethoxylierte Phosphorsäureester, Sulfobernsteinsäureester, Sorbitanester, aliphatische und aromatische Sulfonsäuren oder Sulfonate, Fettalkoholsulfate und andere mehr.

Als hochmolekulare Dispergierharze für die Dispersion des leitfähigen Rußes wie des magnetischen Pigmentes können sulfonatgruppen-, phosphatgruppen- oder carboxylatgruppenhaltige Polyurethane, carboxylatgruppenhaltige Vinylchloridcopolymere, Polyiminpolyester oder Polyetheracrylate mit oder ohne eingebaute funktionelle Gruppen eingesetzt werden.

Als Bindemittel für die Dispersion des magnetischen Pigmentes können die für die Herstellung von Magnetschichten üblichen Bindemittel eingesetzt werden, wie Copolymere aus Vinylchlorid, Vinylacetat und Vinylalkohol, Copolymere aus Vinylidenchlorid und Acrylnitril, Polyvinylacetale wie Polyvinylformale, Polyester/Polyurethane, Polyurethan-oder Polyetherelastomere, Phenoxy- oder Epoxyharze, ebenso wie deren Mischungen.

Weitere Rezepturbestandteile können je nach den gewünschten Eigenschaften der Dispersion oder der fertigen Schicht Verwendung finden. In Frage kommen vor allem Gleitmittel wie z. B. Fettsäuren oder Fettsäurederivate, Silikonöle, Paraffine, Wachse, fluorierte Öle, Dispersionen von Polytetrafluorethylen.

Die Dispergierung des rußhaltigen und des magnetpigmenthaltigen Ansatzes erfolgt getrennt nach im wesentlichen bekannten Verfahrensschritten.

Nach Zusammenmischen und Homogenisierung der ausgewählten Komponenten erfolgt die Feindispergierung beispielsweise an einer Sandmühle, deren Mahlintensität durch Variation der Mahlkörpergröße und -füllung, der Drehzahl und des Lackdurchsatzes eingestellt werden können.

Die Beschichtung der beiden Dispersionen erfolgt vorzugsweise simultan, da bei einem getrennten Auftrag der rußhaltigen Haftschicht auf einen flexiblen Schichtträger ein Verkleben und damit eine Beschädigung der Zwischenschichtoberflächen der Wickel im Halbfabrikat nicht ausgeschlossen werden kann.

So können beispielsweise zwei hintereinanderliegende Rakelgießer, Extrusionsgießer oder Kaskadengießer oder ein Doppelschlitzextrusionsgießer eingesetzt werden.

Die Volumenströme für die rußhaltige Zwischenschicht und die magnetische Oberschicht werden so eingestellt, daß sich für die rußhaltige Zwischenschicht eine Schichtdicke nach Trocknung von 0,5 bis 3 $\mu$m und für die magnetische Oberschicht eine Schichtdicke nach Trocknung von 2,0 bis 4,0 $\mu$m ergibt.

Als Schichtträger können Folien aus Polyester, wie Polyethylenterephthalat, Polyolefine, wie Polypropylen, Cellulosederivate wie Triacetat, Polycarbonate oder starre Schichtträger aus nichtmagnetischen Metallen wie Aluminium oder keramische Materialien eingesetzt werden.

Die weitere Bearbeitung der beschichteten Aufzeichnungsträger wie die Oberflächenglättung durch Kalandern, Schneiden und Konfektionieren, erfolgt in bekannter Weise.

Um die Vorteile des erfindungsgemäßen Schichtaufbaues zu belegen, werden beispielhaft folgende Eigenschaften eines auf 1/2" Breite getrennten Magnetbandes beschrieben.

## 1. Schichthaftung

Mit einer konstanten Andruckkraft wird die magnetische Schicht eines 1/2" breiten Bandes auf ein Klebeband gepresst. Die erforderliche Abzugskraft wird mit einer Kraftmeßdose bestimmt.

## 2. Leitfähigkeit

Die Messung erfolgt an einem LCR-Meter 42 61 A der Fa. Hewlett Packard.

## 3. Speichertechnik

Bei den Bandmustern mit Metallpigmenten in der Magnetschicht wird der Signalrauschabstand bei 7,7 MHz auf einen Betacam SP-Recorder (BVW 75 P der Fa. Sony) bestimmt. Bandmuster mit $CrO_2$ in der Magnetschicht werden auf einem VHS-Recorder (JVC, D 210 EG) gemessen. Als Referenzband wird ein interner Bezug zugrunde gelegt.

## 4. Laufeigenschaften

Auf einem Betacam SP-Recorder wird der Pegelabfall eines 7,7 MHz Signales nach 100facher Wiedergabe gemessen.

Nachfolgend wird die Erfindung anhand von Beispielen näher erläutert. Einer speziellen Ausführungsform der rußhaltigen Haftschicht liegt folgende Rezeptur zugrunde:

Beispiel 1

4

EP 0 388 731 A2

| A) Dispersion für die Zwischenschicht | |
|---|---|
| Lösemittel: | |
| Tetrahydrofuran<br>Cyclohexanon | 1350 Gew. Teile<br>250 Gew. Teile |
| Bindemittel: | |
| Polyesterurethan ($T_g$: - 25° C)<br>Ruß (BET: 256 m²/g, DBP-Adsorption: 120 ml/100g) | 132 Gew. Teile<br>100 Gew. Teile |

| B) Hauptbestandteile der magnetischen Schicht | |
|---|---|
| Metallisches Magnetpigment (BET: 53 m²/g, Hc: 1500 Oe) | 100 Gew. Teile |
| Bindemittel 1 | |
| Polyesterurethan ($T_g$: - 25° C) | 12 Gew. Teile |
| Bindemittel 2 | |
| Polyester ($T_g$: + 52° C) | 10 Gew. Teile |

Beispiel 2

    A) Dispersion für die Zwischenschicht
Wie in Beispiel 1 aber mit einem Polyester (OH-Zahl 10, $T_g$: + 30° C) als Bindemittel.
    B) Hauptbestandteile der magnetischen Schicht wie in Beispiel 1

Beispiel 3

    A) Dispersion für die Zwischenschicht
Wie in Beispiel 1 aber mit einem Polyesterurethan ($T_g$: - 25° C) und einem Polyester (OH-Zahl 10, $T_g$: + 30° C) im Verhältnis 1 : 1 als Bindemittel
    B) Hauptbestandteile der magnetischen Schicht wie in Beispiel 1

Beispiel 4

    A) Dispersion für die Zwischenschicht
Wie in Beispiel 1 aber zusätzlich mit 2 Gew. Teilen eines Imidazolinderivates auf 100 Gew. Teile Ruß bezogen
    B) Hauptbestandteile der magnetischen Schicht wie in Beispiel 1.

Beispiel 5

    A) Dispersion für die Zwischenschicht
Wie in Beispiel 1 aber zusätzlich mit 3 Gew. Teilen Myristinsäure auf 100 Gew. Teile Ruß bezogen
    B) Hauptbestandteile der Magnetschicht wie in Beispiel 1

Beispiel 6

    A) Dispersion für die Zwischenschicht
Wie in Beispiel 1 aber mit 60 Gew. Teilen eines Polyetheracrylates auf 100 Gew. Teile Ruß bezogen
    B) Hauptbestandteile der Magnetschicht wie in Beispiel 1

Beispiel 7

5

A) Dispersion für die Zwischenschicht
Wie in Beispiel 1 aber mit einem Ruß der BET-Oberfläche 254 m$^2$/g und einer DBP-Zahl von 178 ml/100g
B) Hauptbestandteile der magnetischen Schicht wie in Beispiel 1

Beispiel 8

A) Dispersion für die Zwischenschicht
Wie in Beispiel 1 aber mit einem Polyvinylidenchlorid-Copolymerisat ($T_g$: -18 °C).
B) Hauptbestandteile der magnetischen Schicht wie in Beispiel 1, aber Bindemittel 2 (Polyester) 6 Gew.-Teile und zusätzlich Polyvinylidenchlorid-Copolymerisat 4 Gew.-Teile.

Beispiel 9

A) Dispersion für die Zwischenschicht
Wie in Beispiel 1 aber mit einem Polyesterurethan ($T_g$: -25 °C) und einem Polyvinylidenchlorid-Copolymerisat ($T_g$: -18 °C) im Verhältnis 1 : 1 als Bindemittel
B) Hauptbestandteile der magnetischen Schicht wie in Beispiel 1

Beispiel 10

A) Dispersion für die Zwischenschicht
Wie in Beispiel 1 aber mit einem Polyvinylidenchlorid-Copolymerisat ($T_g$: -18 °C) und einem Polyester (OH-Zahl 10, $T_g$: +30 °C) im Verhältnis 1 : 1 als Bindemittel.
B) Hauptbestandteile der magnetischen Schicht wie in Beispiel 1

Beispiel 11

A) Dispersion für die Zwischenschicht wie in Beispiel 1

| B) Hauptbestandteile der magnetischen Schicht | |
| --- | --- |
| Magnetisches Pigment CrO$_2$ (BET: 30 m$^2$/g, Hc: 630 Oe) | 100 Gew.-Teile |
| Bindemittel 1 | |
| Polyesterurethan ($T_g$: - 25 °C) | 14 Gew.-Teile |
| Bindemittel 2 | |
| Polyester ($T_g$: +52 °C) | 6 Gew.-Teile |

Vergleichsbeispiel 1

Es wird die magnetische Schicht aus Beispiel 1 ohne rußhaltige Haftschicht auf den Schichtträger gegossen.

Vergleichsbeispiel 2

Es wird die magnetische Schicht aus Beispiel 11 ohne rußhaltige Haftschicht auf den Schichtträger gegossen.

Vergleichsbeispiel 3

A) Dispersion für die Zwischenschicht
Wie in Beispiel 1 aber mit einem Vinylchloridvinylalkoholcopolymerisat als Bindemittel
B) Hauptbestandteile der magnetischen Schicht wie in Beispiel 1

Vergleichsbeispiel 4

A) Dispersion für die Zwischenschicht
Wie in Beispiel 1 aber mit einem Ruß der BET-Oberfläche 30 m²/g und einer DBP-Zahl von 93 ml/100g
B) Hauptkomponenten der magnetischen Schicht wie in Beispiel 1
Die Ergebnisse der Versuchsbeispiele sind in Tab. 1 dargestellt.

| Beispiel | Schichthaftung p/mm | Oberflächenleitfähigkeit Ohm/Fläche | S/N bei | | Laufeigenschaften |
|---|---|---|---|---|---|
| | | | 7,7 MHz dB | 4,75 MHz dB | |
| 1 | 16 | $10^7$ | 0 | - | gut |
| 2 | 16 | $10^7$ | 0 | - | gut |
| 3 | 22 | $10^6$ | 0 | - | gut |
| 4 | 14 | $10^7$ | 1,0 | - | gut |
| 5 | 14 | $10^7$ | 1,0 | - | gut |
| 6 | 12 | $10^7$ | 0,5 | - | gut |
| 7 | 13 | $10^8$ | - 0,5 | - | gut |
| 8 | 28 | $10^7$ | 0,5 | - | gut |
| 9 | 12 | $10^7$ | 0 | - | gut |
| 10 | 16 | $10^6$ | 0 | - | gut |
| 11 | 9 | $10^6$ | - | 0 | gut |
| Vergleichs-Beispiel | | | | | |
| 1 | 1,5 | $10^{12}$ | - 1 | - | schlecht |
| 2 | 4 | $10^9$ | - | 0 | mittel |
| 3 | 2 | $10^7$ | - 0,5 | - | mittel |
| 4 | 13 | $10^{11}$ | - 2 | - | schlecht |

# Ansprüche

1. Magnetischer Aufzeichnungsträger bestehend aus einem unmagnetischen Schichtträger und einer Magnetschicht, wobei sich zwischen dem Schichtträger und der Magnetschicht eine bindemittel- und rußhaltige Haftschicht befindet, dadurch gekennzeichnet, daß die Haftschicht einen leitfähigen Ruß mit einer BET-Oberfläche zwischen 200 und 700 m²/g und einer DBP-Zahl von kleiner als 300 ml/100 g sowie ein oder mehrere Bindemittel enthält, die auch in der Magnetschicht enthalten sind.

2. Magnetischer Aufzeichnungsträger nach Anspruch 1, dadurch gekennzeichnet, daß das Bindemittel der Haftschicht ein Polyurethan, ein Polyester oder ein Polyvinylidenchlorid-Copolymerisat ist.

3. Magnetischer Aufzeichnungsträger nach Anspruch 1 und 2, dadurch gekennzeichnet, daß das Bindemittel in einer Menge von 50 bis 250 Gew. Teilen auf 100 Gew. Teile des leitfähigen Rußes bezogen eingesetzt wird.

4. Magnetischer Aufzeichnungsträger nach Anspruch 1 und 3, dadurch gekennzeichnet, daß das Bindemittel bevorzugt eine Mischung aus Polyester und Polyurethan im Verhältnis 2 : 8 bis 8 : 2 ist.

5. Magnetischer Aufzeichnungsträger nach Anspruch 1 und 3, dadurch gekennzeichnet, daß das Bindemittel bevorzugt eine Mischung aus Polyester und Polyvinylidenchlorid-Copolymerisat im Verhältnis 2 : 8 bis 8 : 2 ist.

6. Magnetischer Aufzeichnungsträger nach Anspruch 1 und 3, dadurch gekennzeichnet, daß das Bindemittel bevorzugt eine Mischung aus Polyvinylidenchlorid-Copolymerisat und Polyurethan im Verhältnis 2 : 8 bis 8 : 2 ist.

7. Magnetischer Aufzeichnungsträger nach Anspruch 1 bis 6, dadurch gekennzeichnet, daß der leitfähige Ruß mit einem Dispergator belegt ist.

8. Magnetischer Aufzeichnungsträger nach Anspruch 1 bis 7, dadurch gekennzeichnet, daß der leitfähige Ruß mit 1,0 bis 5,0 Gew. Teilen Imidazolinderivat auf 100 Gew. Teilen Ruß bezogen belegt wird.

9. Magnetischer Aufzeichnungsträger nach Anspruch 1 bis 7 dadurch gekennzeichnet, daß der leitfähige Ruß mit 1,0 bis 5,0 Gew. Teilen einer Fettsäure auf 100 Gew. Teile Ruß bezogen belegt wird.

10. Magnetischer Aufzeichnungsträger nach Anspruch 1 bis 7 dadurch gekennzeichnet, daß die Fettsäure bevorzugt Myristinsäure ist.

11. Magnetische Aufzeichnungsträger nach Anspruch 1 bis 10 dadurch gekennzeichnet, daß der leitfähige Ruß mit 10 bis 100 Gew. Teilen eines Polyetheracrylates oder eines Polyiminpolyesters belegt wird.

12. Magnetischer Aufzeichnungsträger nach Anspruch 1 bis 11 dadurch gekennzeichnet, daß die Magnetschicht ferromagnetische Metallpigmente bestehend aus einer Eisen-, Nickel-Legierung, $\gamma$-$Fe_2O_3$, $Fe_3O_4$, Co-dotiertes $Fe_3O_4$ oder $CrO_2$ enthält.

13. Magnetischer Aufzeichnungsträger nach Anspruch 1 bis 12 dadurch gekennzeichnet, daß die Magnetschicht bevorzugt Metallpigmente, bestehend aus einer Eisen-/Nickel-Legierung oder Chromdioxid als ferromagnetische Pigmente enthält.